# EUROPÄISCHE PATENTANMELDUNG

(11) **EP 1 508 428 A1**
(43) Veröffentlichungstag der Anmeldung: **23.02.2005**
(21) Anmeldenummer: 03019039.1
(22) Anmeldetag: 22.08.2003
(51) Int. Cl.: B29C 65/16

(54) **Vorrichtung zum Verbinden von flächigen Kunststoffmaterialien**

(71) Anmelder: Leister Process Technologies, 6060 Sarnen (CH)
(72) Erfinder: Chen, Jie-Wei, 6055 Alpnach Dorf (CH); Pironato, Marcel, 6060 Sarnen (CH)
(74) Vertreter: Klocke, Peter, Dipl.-Ing.

(57) **Zusammenfassung**

Vorrichtung für die großflächige Verschweißung nach dem Laserdurchstrahlverfahren insbesondere von Kunststoffbändern (13,14) zu einer Gitterstruktur. Hierzu werden eine Vielzahl von Bearbeitungsköpfen (1) zu einer Einheit zusammengebaut, so dass ein hoher Prozessdurchsatz erreicht werden kann. Zwischen den einzelnen Bearbeitungsköpfen (1) befinden sich noch Distanzeinrichtungen (15) zum Einstellen Abstandes der oberen transparenten zu verschweißenden Materialbänder (13).

## Beschreibung

Die vorliegende Erfindung betrifft eine Vorrichtung zum Verbinden von flächigen Kunststoffmaterialien nach dem Laserdurchstrahlverfahren, bei dem eine obere, eine Laserquelle zugewandte und für den Laserstrahl transparente Materiallage mit einer unteren den Laserstrahl absorbierenden Lage unter Anwendung von Druck verbunden wird, mit einem Bearbeitungskopf zur Aufnahme von Leiteinrichtungen für den Laserstrahl und einer Einrichtung zur Übertragung des Laserstrahls unter Druckanwendung auf die zu verbindenden Materialien.

Diese Methode des Kunststoffschweißens mit Laserstrahl ist allgemein bekannt und wird auch als Durchstrahlschweißen bezeichnet. Für diese Kunststoffschweißmethode ist es wichtig, dass während des Schweißvorgangs die Materialien miteinander verspannt werden, da eine wichtige Voraussetzung für eine gute Schweißverbindung der Materialien mittels Laserstrahlung nicht nur die Energiedosierung, sondern auch der saubere mechanische Kontakt zwischen den beiden miteinander zu verbindenden Fügeflächen ist. Der Grund dafür ist, dass der transparente Fügepartner nur über den absorbierenden Fügepartner durch thermische Kontaktierung erwärmt wird. Deshalb ist die Schweißqualität zum großen Teil von der mechanischen Spannbedingung abhängig, denn die Größe des Luftspalts zwischen zwei Fügepartnern bestimmt hauptsächlich die Wärmeleitungsqualität.

Für die großflächige Bearbeitung ist es wegen der Materialtoleranz und durch Biegungsproblemen technisch sehr schwierig, das gesamte zu verschweißende Teil komplett zu spannen.

Der vorliegenden Erfindung liegt daher die Aufgabe zugrunde, eine Vorrichtung vorzuschlagen, die gleichzeitig die Laserstrahlung und die Andrückkraft an die aktuelle Schweißstelle punktuell liefert und darüber hinaus es ermöglicht, eine großflächige Verschweißung durchzuführen.

Diese Aufgabe wird erfindungsgemäß durch eine Vorrichtung mit den Merkmalen des Anspruchs 1 gelöst. Weitere vorteilhafte Ausgestaltungen sind den Unteransprüchen zu entnehmen.

Danach weist die Erfindung in dem Bearbeitungskopf Fokussiereinrichtungen und an dem zu verbindenden Material zugewandten Austrittsende eine für den Laserstrahl transparente drehbare Rolle auf. Die Breite der Rolle richtet sich nach der Verbindungsnaht und bei einer Anordnung mehrerer derartiger Bearbeitungsköpfe nebeneinander nach dem Abstand, der zwischen den parallelen Verbindungsnähten vorhanden sein darf. Insofern kann hierfür auch eine Kugel eingesetzt werden, wobei diese jedoch größere Abstände bedingt. Bei der Einstellung auf die Fokusebene zwischen den zu verbindenden Materiallagen wirken die Fokussiereinrichtungen, vorzugsweise ein integriertes Linsensystem, mit der transparenten Rolle zusammen. Zusätzlich weist der Bearbeitungskopf Druckeinrichtungen zum Zusammenpressen der Werkstücke während des Schweißvorganges auf. Die Druckeinrichtungen können Federelemente oder beispielsweise pneumatische Elemente sein, die den Ausgleich zwischen unterschiedlichen Materialstärken vornehmen.

Gemäß einer weiteren bevorzugten Ausbildung sind in dem Bearbeitungskopf Kanäle zum Einblasen von Luft für die Lagerung der Rolle angeordnet. Dies gewährleistet eine gute Drehbewegung der Rolle in dem Bearbeitungskopf.

Um eine Vielzahl von parallelen Linien zu erzeugen, können, durch die Bauform begünstigt, eine Vielzahl von derartigen Bearbeitungsköpfen nebeneinander angeordnet werden. Da durch die Baugröße bedingt zwischen den einzelnen verschweißten Linien ein bestimmter Abstand bleibt, ist es möglich, durch eine zweite Reihe mit versetzt angeordneten Laserköpfen diese Lücke zu füllen. Bevorzugt werden schmale transparente Rollen (Scheiben) aus Glas verwendet. Grundsätzlich ist es für diese Anwendung jedoch auch möglich, stattdessen Glaskugeln zu verwenden, wobei dies aufwendiger ist, da damit auf jeden Fall die Schweißlinien oder Nähte weiter auseinander sind als bei der Verwendung einer transparenten Rolle oder Scheibe. Die Rolle oder Scheibe sind vorzugsweise aus Glas. Die Anordnung der Bearbeitungsköpfe kann beispielsweise auch versetzt zueinander von oben gesehen ein großen V bildend angeordnet werden.

Gemäß einer bevorzugten Ausbildung sind zwischen den Bearbeitungsköpfen Distanzeinrichtungen angeordnet, die zwischen die unter den Bearbeitungsköpfen befindlichen obere Lage eingreifen. Diese Distanzeinrichtungen sorgen beim Vorschub dafür, dass der Abstand beispielsweise bei einander zu verschweißenden Streifen, eingreifen und somit dafür sorgen, dass eine saubere gerade Linie geschweißt werden kann.

Um den Einbauplatz zu minimieren kann der Bearbeitungskopf mit einer Lichtfaser ohne Fokussiereinrichtungen gekoppelt sein, um den Einbauplatz zu minimieren. Der dadurch resultierende Fokuspunkt beschränkt die maximale Schweißgeschwindigkeit. Dieser Nachteil kann durch Erhöhung der Zahl von einzelnen Bearbeitungsköpfen und damit höhere Produktionseffizienz ausgeglichen werden.

Zusätzlich kann vor dem Bearbeitungskopf noch direkt ein linienförmiger Diodenlaser angeordnet werden, der entlang der Bewegungsrichtung eine linienförmige Strahlung bildet, um die Schweißzone vorzuwärmen.

Die einzelnen Bearbeitungsköpfe werden zusammen montiert und in einer Bewegungsrichtung hin und her bewegt. In der vertikalen Richtung zum Ausgleich von Unebenheiten kann jeder Bearbeitungskopf individuell pneumatisch bewegbar sein. Bei dem Verbinden von Kunststoffbändern können diese auf einer großflächigen bewegbaren Platte in Gitterform vorbereitet, stückweise in die Bearbeitungszone des Bearbeitungskopfes eingeschoben und geschweißt werden. Die bewegbare Platte kann auch durch einen rollenden Zylinder ersetzt werden, wobei der Durchmesser so groß gewählt werden muss, dass die Fläche innerhalb der Bearbeitungszone und des Bearbeitungskopfes nahezu flach ist. Die Anordnung mehrerer zusammenmontierter Bearbeitungsköpfe kann dann entlang der Zylinder hin und her bewegt werden. Durch Drehung der Zylinder werden die Kunststoffmaterialien in die Schweißzone eingeführt.

Grundsätzlich ist es auch möglich, die Ablagefläche des großflächigen zu verschweißenden Bauteils oder auch den Zylinder zu beheizen, damit die Kunststoffbänder vor dem Schweißprozess erwärmt werden, um die thermische Kontaktqualität zu verbessern.

Mittels einer derartigen Vorrichtung können großflächige Gitterstrukturen aus Kunststoffbändern hergestellt werden, bei denen keine sinnvolle mechanischen Spannvorrichtungen eingesetzt werden. Durch die Vorrichtung wird eine 100%ige Schweißqualität gewährleistet und eine hoher Produktionsdurchsatz durch die Anordnung von einer Vielzahl von Bearbeitungsköpfen erreicht. Derartige Gitterstrukturen können beispielsweise als feine Siebe Verwendung finden.

Nachfolgend wird die Erfindung anhand eines Ausführungsbeispiels in Verbindung mit den begleitenden Zeichnungen näher erläutert. Es stellen dar:
- Figur 1: die schematische Darstellung eines Bearbeitungskopfes in einem Teillängsschnitt (A) und einem Querschnitt (B);
- Figur 2: die perspektivische Darstellung eines luftgelagerten Bearbeitungskopfes;
- Figur 3: einen Vielfachbearbeitungskopf aus mehreren einzelnen Bearbeitungsköpfen;
- Figur 4: einen Vielfachbearbeitungskopf mit zusätzlichen Distanzeinrichtungen; und
- Figur 5: die schematische Darstellung eines Vielfachbearbeitungskopfes beim Verschweißen von Kunststoffbändern.

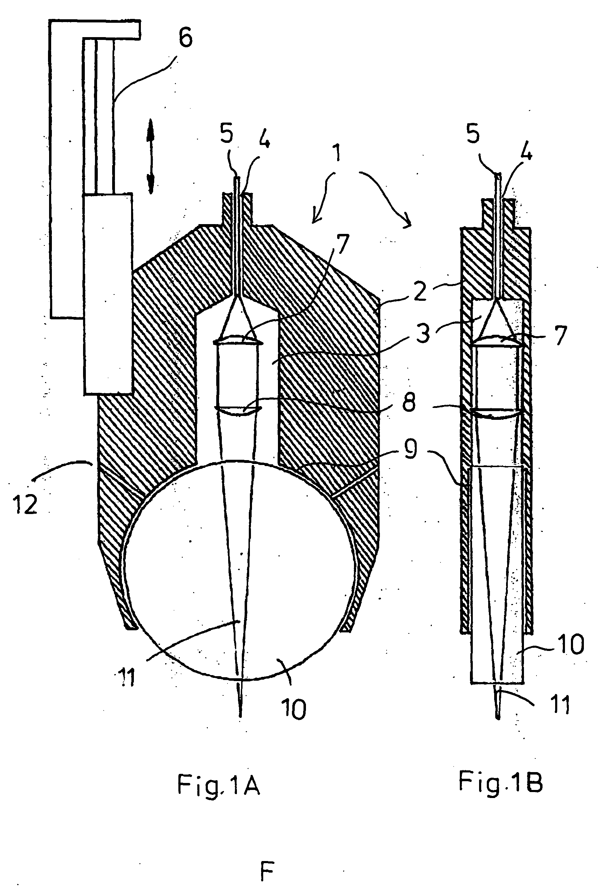

Figur 1 zeigt den Bearbeitungskopf 1 mit einem Gehäuse 2, das mittels einer pneumatischen Kolben-Zylindereinheit 6 in vertikaler Richtung beweglich an einem nicht dargestellten Rahmen befestigt ist. In das Innere des Gehäuses 2 wird über eine Lichtfaser 5, die in einer Bohrung 4 einliegt, der Laserstrahl in einen Hohlraum 3 eingebracht. In dem Hohlraum befinden sich entsprechend geeignete Linsen 7 zur Formung des über die Lichfaser 5 eingekoppelten Laserstrahls 11. Im Anschluss an den Hohlraum 3 befindet sich ein zweiter Hohlraum 9 zur Aufnahme einer scheibenförmigen Glasrolle 10, die von dem Laserstrahl 11 durchdrungen wird und ebenfalls bei der Fokussierung des Laserstrahls 11 auf die gewünschte Fokusebene miteinbezogen wird. Zur Lagerung der scheibenförmigen Glasrolle 10 sind in dem Gehäuse Kanäle 12 zum Einbringen von Druckluft vorgesehen.

Aus der Darstellung gemäß Figur 1 B ist ersichtlich, dass der Bearbeitungskopf hinsichtlich seiner Breite durch die maximale Breite der optischen Elemente (7, 8) und der scheibenförmigen Glasrolle bestimmt wird. Grundsätzlich ist es das Ziel, einen möglichst schmalen Bearbeitungskopf für die Anwendung beim Verschweißen von Bändern zu realisieren.

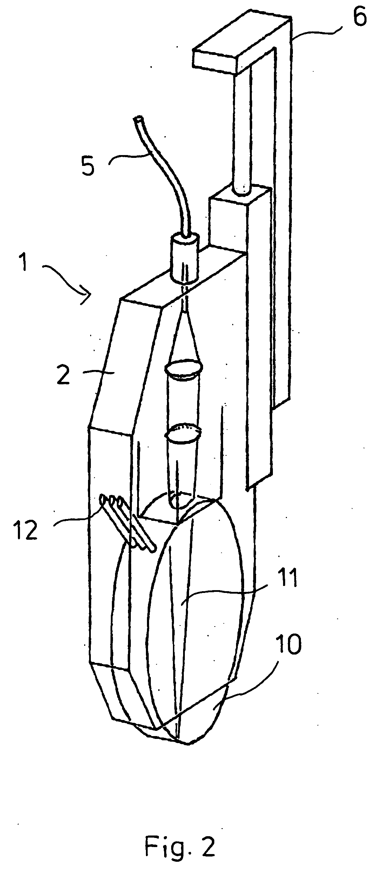

Figur 2 zeigt den Bearbeitungskopf 1 in perspektivischer Ansicht im Zusammenbau, wobei die Kolbenzylindereinheit direkt an das Gehäuse 2 direkt in der Längsachse des Gehäuses 2 angebracht ist, um einen möglichst schmalen Bearbeitungskopf 1 zu realisieren.

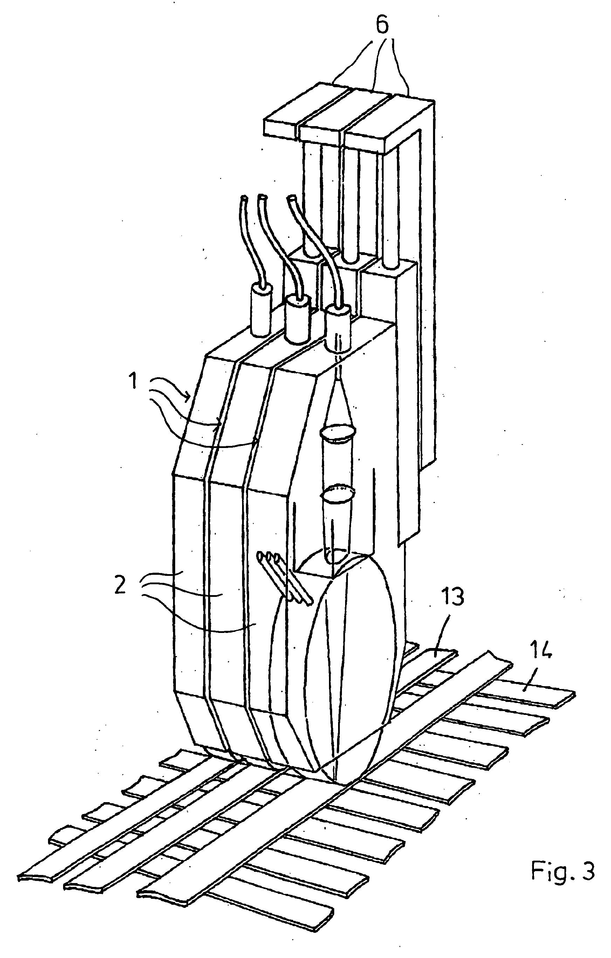

Figur 3 zeigt beispielhaft den Zusammenbau von drei derartigen Bearbeitungsköpfen mit darunter angeordneten zu verschweißenden Kunststoffbändem 13 und 14, wobei entsprechend dem dabei angewendeten Verfahren das obere Kunststoffband 13 transparent und das untere Kunststoffband 14 absorbierend für den Laserstrahl 11 ist.

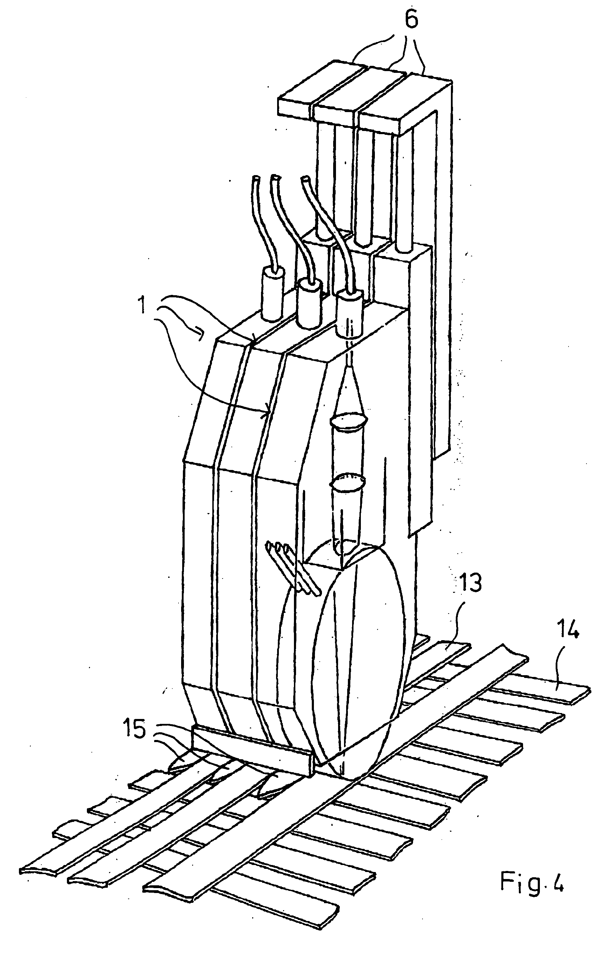

Figur 4 zeigt zwischen den Bearbeitungsköpfen 1 angeordnete Distanzeinrichtungen 15, die dafür sorgen, dass die oberen transparenten Materialbänder 13 geradlinig und mit vorgegebenem Abstand zueinander ausgerichtet sind.

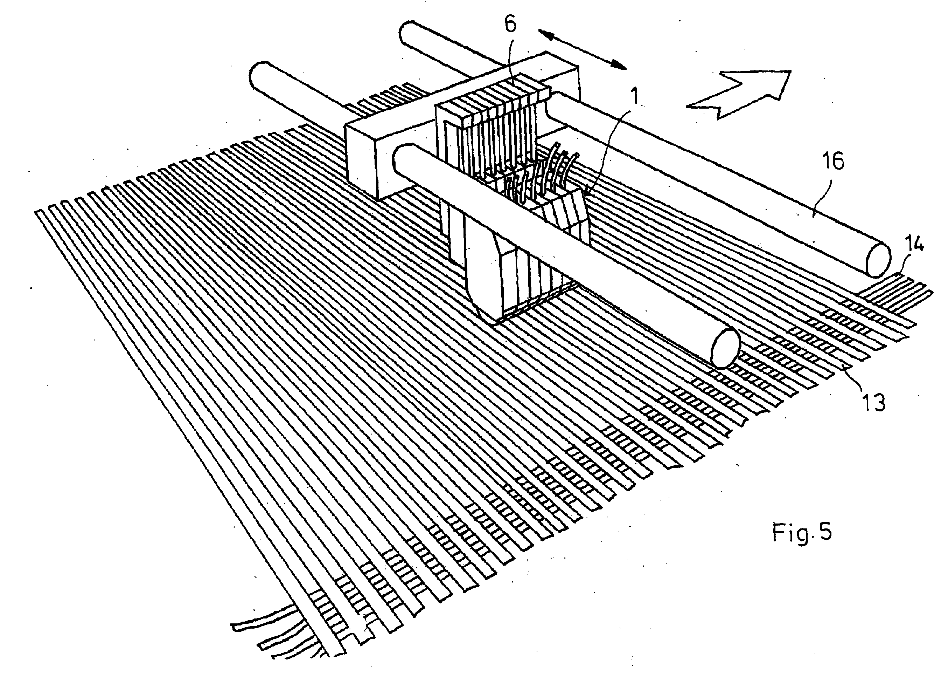

Figur 5 zeigt den großflächigen Einsatz von mehreren miteinander verbundenen Bearbeitungsköpfen 1, die entlang der Materialbänder 13 bewegt und nach erfolgtem Schweißvorgang in Pfeilrichtung auf die nächste Reihe von Materialbändern 13 aufgesetzt wird. In Längsrichtung der Materialbänder 13 kann beispielsweise eine Führung entlang Führungsstangen 16 erfolgen.

## Patentansprüche

1. Vorrichtung zum Verbinden von flächigen Kunststoffmaterialien nach dem Laserdurchstrahlverfahren, bei dem eine obere, einer Laserquelle zugewandte Materiallage aus einem für den Laserstrahl transparenten Material und einer untere Materiallage aus einem für den Laserstrahl absorbierendem Material besteht, so dass die aneinander grenzenden Kontaktflächen der beiden Materiallagen aufschmelzen und bei der anschließenden Abkühlung unter Druck sich miteinander verbinden, mit einem Bearbeitungskopf zur Aufnahme von Leiteinrichtungen für den Laserstrahl und einer Einrichtung zur Übertragung des Laserstrahls unter Druckanwendung auf die zu verbindenden Materiallagen, **dadurch gekennzeichnet, dass** in dem Bearbeitungskopf (1) Fokussiereinrichtungen (7, 8) und an dem den Materiallagen (13, 14) zugewandten Austrittsende eine für den Laserstrahl transparente drehbare Rolle (10) angeordnet sind, wobei bei der Einstellung auf die Fokusebene die Fokussiereinrichtungen (7, 8), vorzugsweise ein integriertes Linsensystem, mit der transparenten Rolle (10) zusammenwirken, und der Bearbeitungskopf (1) Druckeinrichtungen (6) zum Zusammenpressen der Materiallagen während des Verbindungsvorgangs aufweist.

2. Vorrichtung nach Anspruch 1, **dadurch gekennzeichnet, dass** in dem Bearbeitungskopf (1) Kanäle (12) zum Einblasen von Luft für die Lagerung der Rolle (10) angeordnet sind.

3. Vorrichtung nach Anspruch 1 oder 2, **dadurch gekennzeichnet, dass** eine Vielzahl derartiger Bearbeitungsköpfe (1) nebeneinander und/oder versetzt zueinander angeordnet sind.

4. Vorrichtung nach Anspruch 3, **dadurch gekennzeichnet, dass** zwischen den Bearbeitungsköpfen (1) Distanzeinrichtungen (15) angeordnet sind, die zwischen die unter den Bearbeitungsköpfen (1) befindlichen oberen Materiallagen (13) eingreifen.

5. Vorrichtung nach einem der vorangegangenen Ansprüche, **dadurch gekennzeichnet, dass** der Bearbeitungskopf ein längliches schmales Gehäuse (2) aufweist, an das eine Kolben-Zylindereinheit (6) mit den seitlichen Gehäusewänden fluchtend angreift.
